# EUROPEAN PATENT SPECIFICATION

(11) **EP 3 431 342 B1**
(45) Date of publication and mention of the grant of the patent: **12.02.2020**
(21) Application number: 18182362.6
(22) Date of filing: 09.07.2018
(51) Int. Cl.: B60R 11/00

(54) **SYSTEM FOR FASTENING A TELEMATIC MODULE TO THE ROOF OF THE MOTOR VEHICLE**
SYSTEM ZUR BEFESTIGUNG EINES TELEMATIKMODULS AUF DEM DACH EINES FAHRZEUGS
SYSTÈME DE FIXATION POUR FIXER UN MODULE TELEMATIQUE SUR UN TOIT DE VÉHICULE

(30) Priority: 18.07.2017 IT 201700081365
(43) Date of publication of application: 23.01.2019
(73) Proprietor: Magneti Marelli S.p.A., 20011 Corbetta (MI) (IT)
(72) Inventor: SCUTERI, Mr. Ilario, I-20011 Corbetta (Milano) (IT)
(74) Representative: Frontoni, Stefano

(56) References cited:
- US-A- 3 822 049
- US-A- 4 103 983
- US-A1- 2009 213 480

## Description

### TEXT OF THE DESCRIPTION

The present invention relates to a system for fastening a telematic module to the internal structure of a motor vehicle, in particular to the roof.

In the automotive sector, increasingly widespread are the so-called telematic boxes, or telematic modules, which operate for the wireless connections of the vehicle, which are made by corresponding antennas by transmitting the data to other devices that are located inside the vehicle, for example in the passenger compartment.

A module of this type may, for example, comprise a telephone module for connection with the mobile communication networks, a multiconstellation satellite localisation module (for example, GPS, GALILEO, GLONASS), etc. The module may moreover comprise also one or more sensors, for detecting conditions of the vehicle, for example a triaxial accelerometer for detecting the acceleration and braking parameters.

In view of the constant need to simplify the processes carried out along a motor-vehicle assembly line, there have already been proposed in this sector quick-coupling systems for fastening telematic modules of the type in question to the roof of the motor vehicle. US3822049 and US4103983 disclose fastening systems according to the preamble of claim 1.

In the above context, the present invention proposes a fastening system that is improved as compared to known systems and has a particularly simple structure that envisages an easy and fast mode of connection.

In particular, the present invention regards a fastening system according to claim 1.

The claims form an integral part of the technical teaching provided herein in relation to the invention.

Further characteristics and advantages of the invention will emerge clearly from the ensuing description with reference to the annexed drawings, which are provided purely by way of non-limiting example and in which:

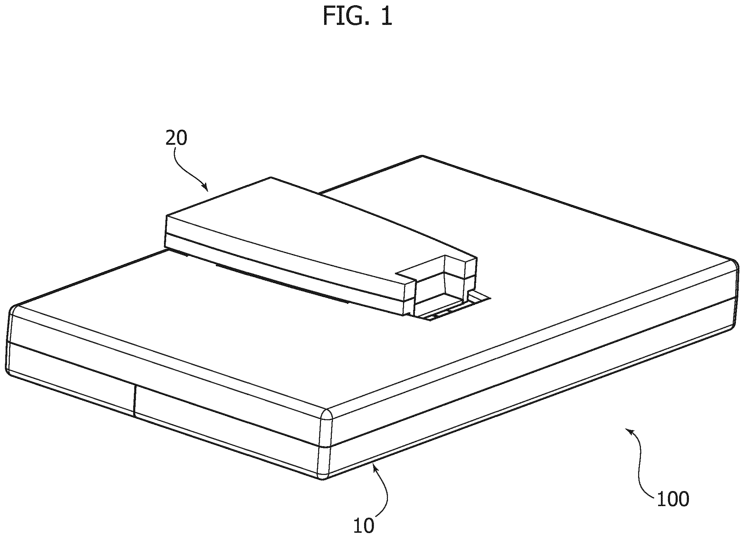

- Figure 1 illustrates an embodiment of the system described herein, according to an axonometric view, in a condition where the telematic module is fixed to the structure of the vehicle;

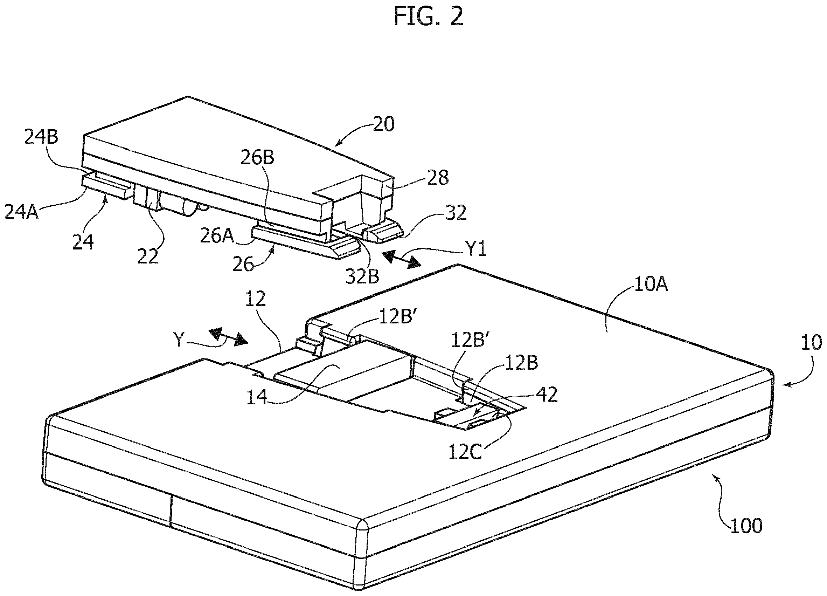

- Figure 2 illustrates the system of Figure 1 in a condition where the telematic module has been separated from the structure of the vehicle;

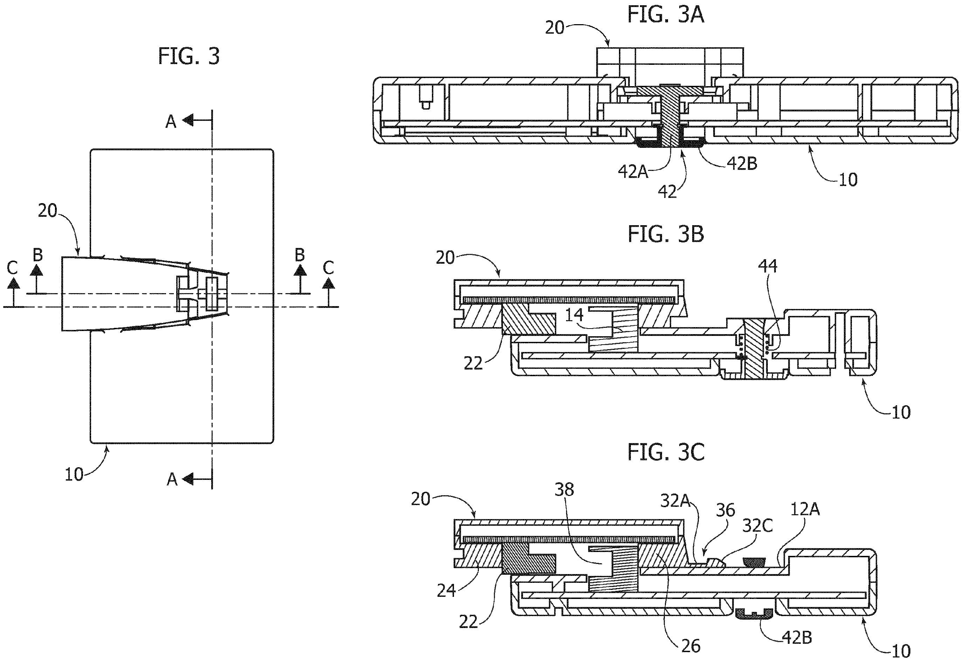

- Figure 3 is a top plan view of the system of Figure 1 in a first condition;
- Figures 3a, 3b, and 3c illustrate cross-sectional views of the system of Figure 3, in the planes of section A-A, B-B, and C-C indicated in Figure 3;

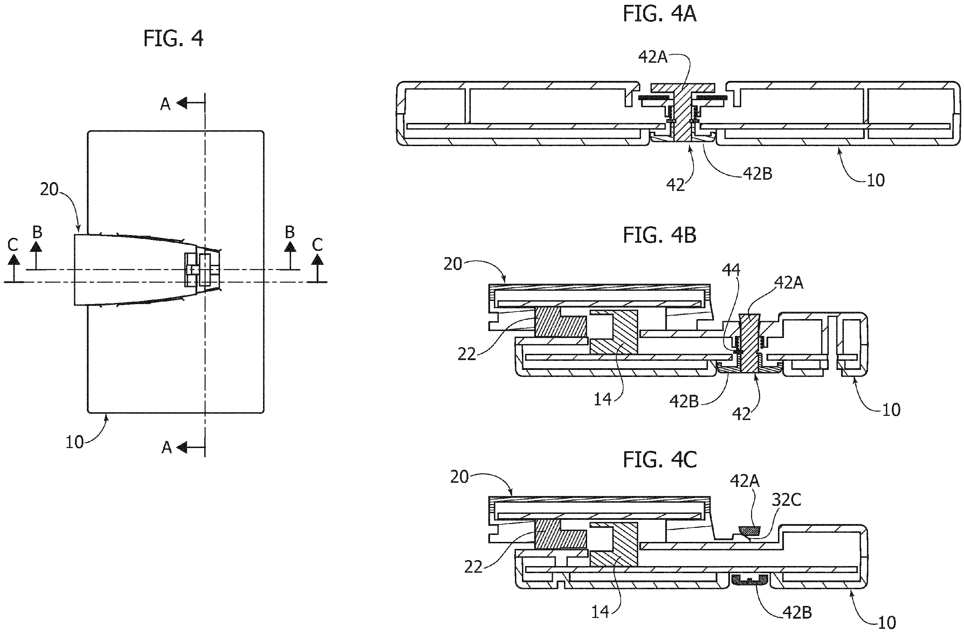

- Figure 4 is a top plan view of the system of Figure 1 in a second condition;
- Figures 4a, 4b, and 4c illustrate cross-sectional views of the system of Figure 4, according to the planes of section A-A, B-B, and C-C represented in Figure 4;

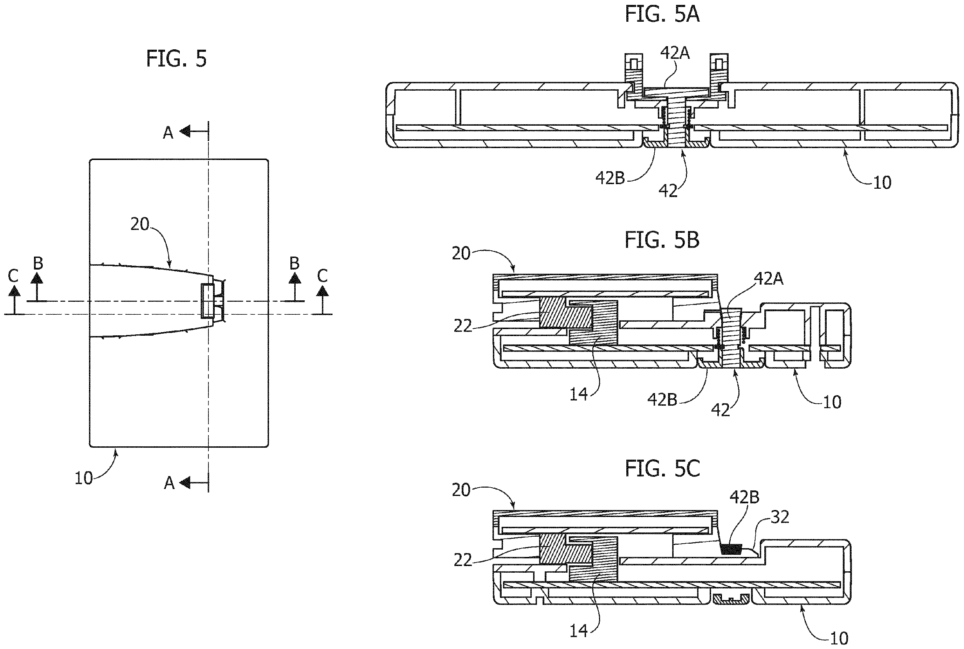

- Figure 5 is a top plan view of the system of Figure 1 in a third condition; and
- Figures 5a, 5b, and 5c illustrate cross-sectional views of the system of Figure 5, according to the planes of section A-A, B-B, and C-C represented in Figure 5.

In the ensuing description, illustrated various specific details are illustrated aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As anticipated above, the system described herein is a system for connection of a telematic module to a structure of a motor vehicle. In particular, the system described herein has been built for connection of the telematic module to the roof of a motor vehicle.

The system comprises a telematic module 100, which is constituted by a closed casing 10, on the outside of which various connectors give out. Internally, the casing 10 contains electronic circuits/components for processing the signals received and transmitting them to other devices of the motor vehicle.

In various preferred embodiments, as in the one illustrated, the casing 10 has the generic shape of a flattened rectangular parallelepiped, and has on one of the two major faces a cavity 12 housed in which is a connector 14. The latter is provided with connecting parts of the female or male type and is so oriented as to define with its connecting parts a direction Y, which constitutes the direction of connection of the connector.

The cavity 12 extends on the face of the casing in said direction Y, preferably for a stretch that is greater than or at least equal to half of the corresponding side of said face (preferably for approximately three quarters of the length of the aforesaid side). The cavity is delimited by a bottom 12a, two opposed side edges 12b, and an end edge 12c, the latter being the part furthest away from the outer profile of the casing.

The connector 14 is arranged within the cavity 12 in an intermediate region between the starting point of the cavity and its inner edge 12c.

The system described herein further comprises a supporting block 20, which in its condition of use is fixed to the structure of the motor vehicle, i.e., to the roof in the preferred application referred to.

The block 20 carries on its side that is to be coupled to the casing 10 (i.e., on its underside, as viewed in the figures), a connector 22, which is to couple with the connector 14 and, for this purpose, has connection parts, of a male or female type, complementary to those of the connector 14. Also the connector 22 is oriented so as to define with its connection parts a direction Y1 that constitutes the direction of connection of the connector.

In view of the foregoing, it hence appears clearly that for coupling the two connectors 14 and 22, these will have to be brought into a mutual position in which the directions Y and Y1 referred to above are aligned to one another. From this condition, coupling of the two connectors will then be obtained by moving them up to one another in the directions Y and Y1.

To return to the description of the structure, the block 20 has a body that reproduces in plan view a profile corresponding to that of the cavity 12 and is to be received in the cavity. The connector 22 is positioned in an intermediate region thereof.

On the same side, the block 20 is provided with formations 24, 26, which are arranged in front of and behind the connector 22 with respect to the direction Y1, and which perform the function of referencing in position the casing 10 on the block 20 and of guiding it in its movement in the direction Y1, to bring the respective connectors 14 and 22 into mutual coupling.

The formations 24 and 26 have, in fact, bottom surfaces 24a, 26a, which are to come into contact with corresponding surfaces defined on the bottom 12a of the cavity 12, and guides 24b, 26b with U-shaped cross section, which are to be engaged by projecting tabs 12b', oriented parallel to the face 10a of the casing, which are provided on the opposed side edges 12b of the cavity 12.

At its end 28 that is to come up against the edge 12c of the cavity 12, the block 20 has a pair of tabs 32 projecting at the front, which are connected to the end 28 via thinned-out segments 32a, separated from one another by a slit 32b.

Accordingly, on the bottom 12a of the cavity 12, close to the edge 12c a blocking member 42 is carried, constituted by a T-shaped body 42A and by a pushbutton 42B, the latter being provided, on its inner side, with a tubular portion received within which is the stem of the T-shaped body. The head of the T-shaped body is set parallel to the plane of the bottom of the cavity 12, oriented orthogonal to the direction Y. The stem of the T-shaped body is, instead, orthogonal to said plane, penetrating into the casing 10 until it reaches the pushbutton by which it is carried, on the opposite face.

A spring 44 is set between the casing 10 and the blocking member 42, acting on the latter so as to push the head of the T-shaped body towards the bottom 12a of the cavity 12.

The head of the T-shaped body is designed to be received in a corresponding seat 36 provided on the block 20, which is delimited, at the bottom, by the segments of reduced thickness 32b, and laterally, by the end 28 of the block 20, on one side, and by the tabs 32, on the opposite side.

The slit 32b enables the T-shaped body to reach the above segments, and the spring 44 pushes the blocking member 42 downwards, bringing the T-shaped body into contact with the segments 32b.

The edges of the tabs 32 facing the end 28 of the block 20 define a contrast surface for the T-shaped body, which prevents movement of the casing 10 in the direction Y towards separation from the block 20.

Moreover, the tabs 32 have, on their front part (as viewed in the figure) that faces the blocking member 42 in a condition in which the element 20 has not yet been completely inserted into the cavity 12, ramp-shaped portions 32c pre-arranged for pushing the head of the T-shaped body away from the bottom of the cavity 12, as a result of insertion of the body 20 into the cavity in the direction Y.

This causes the blocking member 42 to be automatically raised to enable the block 20 to reach the end-of-travel position inside the cavity 12. Once this position has been reached, the member 42 is then pushed by the spring 44, towards the bottom 12a, into contact with the segments 32b.

With reference now to operation of the system, in an initial condition the supporting block 20 is already fastened to the roof of the motor vehicle, with its underside accessible from beneath and the connector 22 oriented in space to identify the direction Y1. It should now be noted that this block may be constituted by a stand-alone element, as represented in the figure, or else may form part of a more complex component, for example a panel, which is anchored to the roof of the motor vehicle. The fixing means used may be of any conventional type, for example glue, screws, bolts, etc.

For connection of the telematic module 100, the latter is brought close to the block 20 with the face 10a of its casing facing upwards and oriented in such a way that the direction Y of the connector 14 is aligned with the direction Y1 of the connector 22. With respect to a plan view, the casing 10 of the telematic module is brought underneath the block 20, aligning the connector 14 with the space 38 of the block 20 that is enclosed between the connector 22 and the formations 26.

In the above condition, the casing 10 is hence raised by bringing the block 20 into the cavity 12, with the formations 24 and 26 set in contact with the corresponding surfaces of the bottom 12a of the cavity 12. Once this position has been reached, the male/female connection parts of the connectors 14 and 22 - as likewise the directions Y, Y1 - are perfectly aligned.

At this point, the casing 10 can be moved along direction Y/Y1, in the direction of moving the end 28 of the block 20 close to the end edge 12c of the cavity 12. This movement leads to mutual coupling of the male/female parts of the two connectors 14, 22.

During this movement, as has been seen above, the ramp-shaped portions 32c of the tabs 32 raise the member 42, and, following upon a further displacement of the block 20, the member 42 is pushed by the spring 44 into the seat 36 of the member 42.

The operator is able to realize that blocking of the module 10 has taken place from the sound due to clicking of the member 42 into the seat 36.

To remove the telematic module, it is sufficient to press the pushbutton 42B so as to raise the blocking member 42 above the contrast surface defined by the corresponding edge of the tabs 32. The module can then be moved in the direction Y away from the block 20, until the connectors 22 and 14 are decoupled from one another, and the guides 24b and 26b are decoupled from the tabs 12b' of the cavity 12. Once this position has been reached, the module can finally be separated completely by pulling it downwards.

As has been seen, the blocking member 42, in addition to performing the function of blocking of the telematic module on the supporting block 20, also provides the operator with an indication, of an acoustic type, that blocking has occurred, precisely through the sound due to clicking of the member 32 into the seat 36. This indication guides the operator in the displacement of the telematic module in the direction Y/Y1, enabling him to verify immediately that the blocking position has been reached.

Finally, it should be noted that alternative embodiments may envisage a configuration of the means for mutual connection of the telematic module to the supporting block that is perfectly specular with respect to the one illustrated above, i.e., with the supporting block provided with the cavity 12 and the member 42, and the telematic module provided with the formations 24 and 26 and the tabs 32.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

## Claims

1. A system for fastening a telematic module to a structure of a motor vehicle, in particular to the roof of a motor vehicle, comprising:
- a telematic module having a closed outer casing (10) and containing at least one first connector (14) for receiving signals and at least one electronic component for processing said signals;
- a block (20) for supporting said module, which is to be fixed to said structure of the motor vehicle and is equipped with a second connector (22) designed for connection to said first connector (14); and
- a first fastening unit and a second fastening unit, one carried by said block and the other carried by said module, or vice versa, which are configured for co-operating together to provide a connection of a removable type of said module on said block,
wherein said first and second connectors (14, 22) have a configuration of a male-female type that defines a single direction (Y, Y1) of mutual connection for said first and second connectors;
wherein said supporting block and said casing of said module have respective formations designed to come into mutual engagement to guide a movement of sliding of said module on said block, in said direction, as far as an end position where said first and second connectors are connected together;
wherein said first unit has a seat (36) defining at least one contrast surface, and said second unit defines a blocking element (42) operated by a spring (44), said first and second units being arranged on said casing and on said supporting block in such a way that, when said module is in said end position, said blocking element (42) is positioned in said seat (36) pushed by said spring (44); and
wherein said first unit or said second unit has a cam surface (32c) pre-arranged for moving said blocking element (42) against the action of said spring (44) as a result of the movement of said module towards said end position,
said system being **characterized in that**:
said casing (10) or supporting block (20) has a face (10A) in which a cavity (12) is made, housed within which is said first connector (14), wherein said cavity (12) extends on said face in said direction of connection (Y), and wherein said block (20) or said casing (10) has a body that reproduces a profile corresponding to that of said cavity (12) and is to be received therein, and
said block (20) or casing (10) is provided with formations (24, 26), which are arranged in front of and behind said second connector (22) or first connector (14) with respect to said direction of connection (Y1), and have surfaces (24a, 26a) that are to come into contact with corresponding surfaces defined on the bottom (12a) of said cavity (12), and guides (24b, 26b) with U-shaped cross section, which are to be engaged by projecting tabs, oriented parallel to said face (10a), which are provided on opposed side edges (12b) of said cavity (12).

2. The system according to Claim 1, wherein said first fastening unit is provided at the end (28) of said body (20) that is to come to occupy the innermost position of said cavity (12) with respect to said direction of connection (Y, Y1), said first unit comprising at least one tab (32) projecting at the front from said end and connected to said end (28) via a thinned-out segment (32a), said seat (36) being delimited between said tab (32) and said end (28), and wherein said second unit is carried on said bottom (12a) of said cavity and has a blocking member (42) that is pushed by said spring (44) towards said bottom of said cavity, and comprises said blocking element and a pushbutton for pushing said blocking member against the action of said spring (44).

3. The system according to Claim 2, wherein edges of said tab (32) facing said end (28) of said body (20) define said contrast surface.

4. The system according to Claim 2 or Claim 3, wherein said tab (32) has, on the front part, a ramp-shaped portion (32c) that defines said cam surface and is pre-arranged for pushing said blocking member (42) away from said bottom of said cavity (12).

## Patentansprüche

1. System zum Befestigen eines Telematikmoduls an einer Struktur eines Kraftfahrzeugs, insbesondere an dem Dach eines Kraftfahrzeugs, Folgendes umfassend:
- ein Telematikmodul mit einem geschlossenen Außengehäuse (10), mindestens einen ersten Verbinder (14) zum Empfangen von Signalen und mindestens eine elektronische Komponente zum Verarbeiten der Signale enthaltend;
- einen Block (20) zum Halten des Moduls, der an der Struktur des Kraftfahrzeugs fixiert werden soll und mit einem zweiten Verbinder (22) ausgestattet ist, der zum Verbinden mit dem ersten Verbinder (14) ausgelegt ist; und
- eine erste Befestigungseinheit und eine zweite Befestigungseinheit, von denen eine von dem Block und die andere von dem Modul getragen wird, oder umgekehrt, die so konfiguriert sind, dass sie zusammenwirken, um eine entfernbare Verbindung des Moduls an dem Block bereitzustellen,
wobei der erste und der zweite Verbinder (14, 22) eine Konfiguration einer SteckerBuchsen-Art aufweisen, die eine einzige Richtung (Y, Y1) der gegenseitigen Verbindung für den ersten und den zweiten Verbinder definiert;
wobei der Halteblock und das Gehäuse des Moduls entsprechende Ausformungen aufweisen, die dazu ausgelegt sind, in gegenseitigen Eingriff zu kommen, um eine Gleitbewegung des Moduls auf dem Block in der Richtung bis zu einer Endposition zu führen, an der der erste und der zweite Verbinder miteinander verbunden sind;
wobei die erste Einheit einen Sitz (36) aufweist, der mindestens eine Kontrastfläche definiert, und die zweite Einheit ein Sperrglied (42) definiert, das durch eine Feder (44) betätigt wird, wobei die erste und die zweite Einheit so an dem Gehäuse und an dem Halteblock angeordnet sind, dass, wenn sich das Modul in der Endposition befindet, das Sperrglied (42) in dem Sitz (36) von der Feder (44) gedrückt positioniert ist; und
wobei die erste Einheit oder die zweite Einheit eine Nockenoberfläche (32c) aufweist, die zum Bewegen des Sperrglieds (42) gegen die Wirkung der Feder (44) infolge der Bewegung des Moduls in Richtung auf die Endposition vorgesehen ist,
wobei das System **dadurch gekennzeichnet ist, dass**:
das Gehäuse (10) oder der Halteblock (20) eine Fläche (10A) aufweist,
in der ein Hohlraum (12) ausgebildet ist, in dem sich der erste Verbinder (14) befindet, wobei sich der Hohlraum (12) auf der Fläche in der Verbindungsrichtung (Y) erstreckt und wobei der Block (20) oder das Gehäuse (10) einen Körper aufweist, der ein Profil entsprechend dem des Hohlraums (12) reproduziert und darin aufgenommen werden soll, und
der Block (20) oder das Gehäuse (10) mit Ausformungen (24, 26) versehen ist, die in Bezug auf die Verbindungsrichtung (Y1) vor und hinter dem zweiten Verbinder (22) oder dem ersten Verbinder (14) angeordnet sind und Oberflächen (24a, 26a) aufweisen, die in Kontakt mit entsprechenden Oberflächen kommen sollen, die auf dem Boden (12a) des Hohlraums (12) definiert sind, und Führungen (24b, 26b) mit U-förmigem Querschnitt, die von vorstehenden Laschen in Eingriff genommen werden sollen, die parallel zu der Fläche (10a) ausgerichtet sind und an gegenüberliegenden Seitenkanten (12b) des Hohlraums (12) vorgesehen sind.

2. System nach Anspruch 1, wobei die erste Befestigungseinheit am Ende (28) des Körpers (20) bereitgestellt ist, der die innerste Position des Hohlraums (12) in Bezug auf die Richtung der Verbindung (Y, Y1) einnimmt, wobei die erste Einheit mindestens eine Lasche (32) umfasst, die von dem Ende nach vorne vorsteht und über ein ausgedünntes Segment (32a) mit dem Ende (28) verbunden ist, wobei der Sitz (36) zwischen der Lasche (32) und dem Ende (28) begrenzt ist und wobei die zweite Einheit am Boden (12a) des Hohlraums getragen wird und ein Sperrglied (42) aufweist, das durch die Feder (44) in Richtung des Bodens des Hohlraums gedrückt wird, und das Sperrglied und einen Druckknopf zum Drücken des Sperrglieds gegen die Wirkung der Feder (44) umfasst.

3. System nach Anspruch 2, wobei Kanten der Lasche (32), die zu dem Ende (28) des Körpers (20) ausgerichtet sind, die Kontrastoberfläche definieren.

4. System nach Anspruch 2 oder Anspruch 3, wobei die Lasche (32) auf dem vorderen Teil einen rampenförmigen Abschnitt (32c) aufweist, der die Nockenfläche definiert und vorangeordnet ist zum Drücken des Sperrglieds (42) weg vom Boden des Hohlraums (12).

## Revendications

1. Système de fixation d'un module télématique à une structure d'un véhicule automobile, en particulier au toit d'un véhicule automobile, comprenant :
- un module télématique ayant un boîtier externe fermé (10) et contenant au moins un premier connecteur (14) pour recevoir des signaux et au moins un composant électronique pour traiter lesdits signaux ;
- un bloc (20) pour supporter ledit module, lequel est destiné à être fixé à ladite structure du véhicule automobile et est équipé d'un second connecteur (22) conçu pour une connexion audit premier connecteur (14) ; et
- une première unité de fixation et une seconde unité de fixation, l'une supportée par ledit bloc et l'autre supportée par ledit module, ou vice versa, qui sont configurées pour coopérer l'une avec l'autre pour fournir une connexion d'un type amovible dudit module sur ledit bloc,
dans lequel lesdits premier et second connecteurs (14, 22) ont une configuration d'un type mâle/femelle qui définit une direction unique (Y, Y1) de connexion mutuelle pour lesdits premier et second connecteurs ;
dans lequel ledit bloc de support et ledit boîtier dudit module ont des formations respectives conçues pour une mise en prise mutuelle pour guider un mouvement de coulissement dudit module sur ledit bloc, dans ladite direction, jusqu'à une position d'extrémité où lesdits premier et second connecteurs sont connectés l'un à l'autre ;
dans lequel ladite première unité a un siège (36) définissant au moins une surface de contraste, et ladite seconde unité définit un élément de blocage (42) actionné par un ressort (44), lesdites première et seconde unités étant agencées sur ledit boîtier et sur ledit bloc de support de telle manière que, lorsque ledit module est dans ladite position d'extrémité, ledit élément de blocage (42) est positionné dans ledit siège (36) poussé par ledit ressort (44) ; et
dans lequel ladite première unité ou ladite seconde unité a une surface à came (32c) préalablement agencée pour déplacer ledit élément de blocage (42) contre l'action dudit ressort (44) en résultat du mouvement dudit module vers ladite position d'extrémité,
ledit système étant **caractérisé en ce que** :
ledit boîtier (10) ou bloc de support (20) a une face (10A) dans laquelle une cavité (12) est formée, à l'intérieur de laquelle est logé ledit premier connecteur (14), dans lequel ladite cavité (12) s'étend sur ladite face dans ladite direction de connexion (Y), et dans lequel ledit bloc (20) ou ledit boîtier (10) a un corps qui reproduit un profil correspondant à celui de ladite cavité (12) et est destiné à être reçu dans celle-ci, et
ledit bloc (20) ou boîtier (10) est pourvu de formations (24, 26), qui sont agencées à l'avant et à l'arrière dudit second connecteur (22) ou premier connecteur (14) par rapport à ladite direction de connexion (Y1), et ont des surfaces (24a, 26a) qui sont destinées à entrer en contact avec des surfaces correspondantes définies sur le fond (12a) de ladite cavité (12), et des guides (24b, 26b) avec une section transversale en forme de U, qui sont destinés à être mis en prise par des pattes saillantes, orientées parallèlement à ladite face (10a), qui sont fournies sur des côtés latéraux opposés (12b) de ladite cavité (12).

2. Système selon la revendication 1, dans lequel ladite première unité de fixation est fournie au niveau de l'extrémité (28) dudit corps (20) qui est destinée à venir occuper la position la plus à l'intérieur de ladite cavité (12) par rapport à ladite direction de connexion (Y, Y1), ladite première unité comprenant au moins une patte (32) faisant saillie au niveau de l'avant à partir de ladite extrémité et connectée à ladite extrémité (28) par l'intermédiaire d'un segment aminci (32a), ledit siège (36) étant délimité entre ladite patte (32) et ladite extrémité (28), et dans lequel ladite seconde unité est supportée sur ledit fond (12a) de ladite cavité et a un élément de blocage (42) qui est poussé par ledit ressort (44) vers ledit fond de ladite cavité, et comprend ledit élément de blocage et un bouton poussoir pour pousser ledit élément de blocage contre l'action dudit ressort (44).

3. Système selon la revendication 2, dans lequel les bords de ladite patte (32) faisant face à ladite extrémité (28) dudit corps (20) définissent ladite surface de contraste.

4. Système selon la revendication 2 ou la revendication 3, dans lequel ladite patte (32) a, sur la partie avant, une portion en forme de rampe (32c) qui définit ladite surface à came et est préalablement agencée pour pousser ledit élément de blocage (42) à l'écart dudit fond de ladite cavité (12).
